Europäisches Patentamt

European Patent Office

Office européen des brevets

(11) Veröffentlichungsnummer: **0 167 843 B1**

(12) **EUROPÄISCHE PATENTSCHRIFT**

(45) Veröffentlichungstag der Patentschrift: **02.01.92**

(21) Anmeldenummer: **85107077.1**

(22) Anmeldetag: **07.06.85**

(51) Int. Cl.⁵: **H01S 3/10**, G02F 1/21, B23K 26/00

(54) **Anordnung zur externen Modulation von CO2-Laser-Strahlung hoher Leistung.**

(30) Priorität: **08.06.84 DD 264005**

(43) Veröffentlichungstag der Anmeldung:
**15.01.86 Patentblatt 86/03**

(45) Bekanntmachung des Hinweises auf die
Patenterteilung:
**02.01.92 Patentblatt 92/01**

(84) Benannte Vertragsstaaten:
**AT BE CH DE FR GB IT LI NL SE**

(56) Entgegenhaltungen:
**DE-A- 2 242 438       DE-A- 3 226 811
DE-C- 710 614          GB-A- 1 229 289
US-A- 3 614 655        US-A- 3 955 880**

(73) Patentinhaber: **Feinmechanische Werke Halle GmbH
Rudolf-Breitscheid-Strasse 71
O-4020 Halle(DE)**

(72) Erfinder: **Staupendahl, Gisbert, Dr.sc.nat
Dresdener Strasse 1
WDR-4020 Halle/Süd(DE)**
Erfinder: **Pöhler, Manfred, Dr.rer.nat.
Block 213/8
WDR-4090 Halle-Neustadt(DE)**
Erfinder: **Schindler, Klaus, Dr.rer.nat.
Stolzerstrasse 9
WDR-5000 Erfurt(DE)**

(74) Vertreter: **Spott, Gottfried, Dr. et al
Spott Weinmiller & Partner Sendlinger-
Tor-Platz 11
W-8000 München 2(DE)**

## Beschreibung

Anwendungsgebiet der Erfindung

Die Erfindung betrifft eine Anordnung zur externen Modulation von $CO_2$-Laser-Strahlung hoher Leistung und definierter Wellenlänge insbesondere für den Einsatz in $CO_2$-Laser-Materialbearbeitungseinrichtungen. Vorrangiges Anwendungsgebiet der Erfindung sind dabei Materialbearbeitungsaufgaben wie bspw. Materialabtrag oder Gravur hoher Genauigkeitsanforderungen mittels kontinuierlicher Variation der Strahlungsintensität oder Ritzen und Trennen mittels periodischer Strahlungsimpulse definierter Intensität.

Charakteristik der bekannten technischen Lösungen

Es ist bereits bekannt, daß es für viele Anwendungen der Laserstrahlung vorteilhaft ist, die eigentliche Strahlungsquelle, den Laser, stabil mit definierten Strahlungseigenschaften arbeiten zu lassen und eine entsprechend der jeweiligen Arbeitsaufgabe eventuell erforderliche Intensitätsmodulation mit Modulatoren zu erzeugen, die außerhalb des Laserresonators angeordnet sind. Es sind verschiedenartige technische Lösungen einer solchen Externen Intensitätsmodulation bekannt.

Die einfachste Variante ist die Zerhackung des Laserstrahles wit Hilfe rotierender Sektorscheiben. Sie besitzt u.a. den großen Nachteil, daß nur periodische Modulationen sinnvoll realisiert werden können.

Den gleichen Nachteil besitzt eine in der DE-OS 29 18 283 beschriebene Vorrichtung zur optischen Zerhackung eines Laserstrahles in diskrete Lichtimpulse In dieser Vorrichtung wird mittels eines rotierenden Prismenspiegels erreicht, daß sequentiell und wiederholt eine Anzahl von Zielpunkten mit den erzeugten Strahlungsimpulsen beaufschlagt werden.

Eine in sehr weiten Grenzen frei wählbare Modulation gestattet die Ausnutzung des elektrooptischen Effektes in Kristallen oder Flüssigkeiten. Diese Methode ist vor allem im sichtbaren Spektralbereich sehr effektiv. Dementsprechend gibt es eine Reihe technischer Lösungen für diesen Bereich, z.B. den in der DE-OS 30 13 498 vorgestellten optischen Modulator. Im mittleren Infrarot $\mu m$ 10 $\mu m$ Wellenlänge, also dem Bereich der $CO_2$-Laserstrahlung, ist der elektrooptische Effekt jedoch sehr uneffektiv, eine ausreichende Modulationstiefe kann nur mit großen Kristallängen und hohen Steuerspannungen erreicht werden (siehe z.B. IEEE Journal of Quantum Electronics, vol. QE-2, 243 (1966)).

Freie Modulation mit niedrigen Steuerspannungen ermöglichen Modulatoren in integriert-optischer Bauweise. Speziell für Strahlung im mittleren IR wurden z.B. integriert-optische Modulatoren auf der Basis von Wellenleiterstruktionen im GaAs entwickelt, die zur Modulation den elektrooptischen Effekt in diesem Material ausnutzen (siehe z.B. "Integrierte Optik", Herausg. T. Tamir, Verlag "Mir", Moskau 1978). Hauptnachteil solcher Modulatoren ist die Begrenzung der modulierbaren Strahlungsleistung durch die Zerstörungsschwelle der Wellenleiterstrukturen. Wegen der geringen Querschnitte der Wellenleiter liegt die obere Grenze der modulierbaren Strahlungsleistung bei etwa 100 W.

Eine Reihe von Modulatorvarianten nutzt Interferenzeffekte der Strahlung aus, wobei besondere Bedeutung ANordnungen vom Typ des Fabry-Perot-Interferometers zukommt.

So wird in der DD-PS 140 948 eine Anordnung beschrieben, die mittels schneller Durchstimmung der optischen Weglänge einer speziellen Fabry-Perot-Anordnung die Modulation, insbesondere die Verkürzung von $CO_2$-Laserimpulsen, gestattet. Da die Vorrichtung auf der schnellen Rotation einer der beiden Interferometerplatten beruht, ist sie auf periodische Vorgänge beschränkt, erlaubt also keine freie Modulation.

Wie mit Hilfe optischer Effekte in Halbleitern unter Ausnutzung der Wirkung einer Fabry-Perot-Anordnung $CO_2$-Laserstrahlung moduliert werden kann, wird in der DD-PS 145 588 beschrieben. In diesem Fall erfolgt die schnelle Durchstimmung der optischen Weglänge und die damit verbundene Durchstimmung der Transmission einer Halbleiterplatte durch Variation der Drehzahl n, welche durch in der Halbleiterplatte erzeugte freie Ladungsträger hervorgerufen wird. Diese Anordnung kann jedoch nur sinnvoll zur Verkürzung und Selektion von Laserimpulsen eingesetzt werden, für eine freie Modulation von $CO_2$-Laserstrahlung hoher Leistung ist sie ungeeignet.

In der DE-OS 2 242 438 wird schließlich ein IR-Modulator beschrieben, dessen Aufgabe die periodische Modulation schwacher Infrarot-Strahlung mittels periodischer Änderung des Abstandes zweier Interferometerplatten, die aus für die Strahlung transparentem Material bestehen, ist. Entsprechend diesem Ziel ist der Modulator so aufgebaut, daß er keine freie Modulation intensiver $CO_2$-Laserstrahlung gestattet.

Ziel der Erfindung

Es ist Ziel der Erfindung, eine Anordnung zur externen Modulation von $CO_2$-Laser-Strahlung hoher Leistung und definierter Wellenlänge zu schaffen, mit deren Einsatz bei einfacher Handhabung, relativ niedrigen Kosten sowie hoher Lebensdauer eine breite Palette von Materialbearbeitungsaufgaben, wie bspw. Gravur hoher Genauigkeitsanforderungen, präzise definierter Materialabtrag bspw. bei der Laserbeschriftung sowie Ritzen oder Trennen mit hoher Präzision und Geschwindigkeit bei optimaler Qualität sowie mit hoher Arbeitsproduktivität gelöst werden kann.

Darlegung der Erfindung

Aufgabe der Erfindung ist es, eine Anordnung zur externen Modulation von $CO_2$-Laser-Strahlung hoher Leistung und definierter Wellenlänge zu schaffen, mit deren Einsatz es möglich ist, bis zu einer durch die physikalisch-technischen Eigenschaften der Anordnung vorgegebenen maximalen Modulationsfrequenz die Intensität der Laserstrahlung frei wählbar zwischen einem genau definierten Maximal- und Minimalwert zu variieren, bzw. periodische Strahlungsimpulse definierter Intensität in einer definierten Frequenz zu erzeugen sowie vorteilhafte Anwendungsmöglichkeiten in Verbindung mit einem Hochleistungslaser unter Ausnutzung der zu erreichenden Modulatorspezifik zu schaffen.

Gemäß der Erfindung wird diese Aufgabe mittels folgender Anordnung gelöst. Der zu modulierende Laserstrahl wird auf zwei planparallel zueinander in einem definierten Abstand angeordnete Platten aus transparentem Material, vorzugsweise aus Ge, GaAs oder ZnSe, die auf den einander zugewandten, exakt ebenen Innenflächen verspiegelt und auf den Außenflächen entspiegelt sind, senkrecht oder annähernd senkrecht eingestrahlt. Eine dieser Platten ist dabei vorzugsweise über geeignete Justierelemente (zur Einstellung des planparallelen Abstandes zur anderen Platte) fest mit einem massiven Grundkörper verbunden, der aus einem starken Permanentmagneten einschließlich der zugehörigen magnetischen Leiteisen und einem schwingungsstabilen Gehäuse gebildet wird. Demgegenüber bildet die andere Platte gemeinsam mit einem Spezialhohlzylinder. der an einer elastischen Membran befestigt ist, ein relativ zum Gerätegrundkörper schwingungsfähiges System. Die für die Modulation der Strahlung erforderliche Abstandsänderung der Platten wird erzeugt, indem das schwingungsfähige System mittels entsprechender elektrischer Steuersignale angetrieben wird durch die elektromagnetische Wechselwirkung zwischen dem Permanentmagneten und einer vom Steuerstrom durchflossenen Spule, die auf einem Spezialhohlzylinder angebracht ist und die sich Im Luftspalt zwischen den Polen des Permanentmagneten befindet. Um zu gewährleisten; daß der mechanische Schwinger im vorliegenden Frequenzbereich von f = 0 bis zur Resonanzfrequenz, der durch das elektrische und das mechanische System vorgegeben ist, innerhalb vorgegebener Toleranzen dem Verlauf des Steuerstromes folgt, wird das schwingungsfähige System durch die Reibungskraft eines Dämpfungsmediums definiert hoher Viskosität gedämpft, das sich im Spalt zwischen der Innenfläche des Spezialhohlzylinders und der Außenfläche eines in geeigneter Weise angeordneten, fest mit dem Gerätegrundkörper verbundenen Hohlkörpers, vorzugsweise dem Kern des Permanentmagneten, befindet. Die Größe der Dämpfung ist dabei genau den Parametern des schwingungsfähigen Systems angepaßt. Erfindungsgemäß wird diese Anpassung vorteilhaft dadurch erreicht, daß die Innenfläche des Spezialhohlzylinders im für die Dämpfung wirksamen Bereich und die Außenfläche des als Gegenstück fungierenden Hohlkörpers schwach konisch mit identischer Steigung (Durchmesservergrößerung) in Richtung der Modulatorachse ausgebildet sind, so daß durch eine relativ geringe Verschiebung des Hohlkörpers, bspw. mit Hilfe eines Präzisionsgewindes, längs seiner Achse die effektive Breite des mit dem hochviskosen Dämpfungsmedium ausgefüllten Spaltes zwischen dem Spezialhohlzylinder und dem Hohlkörper variiert werden kann. Dadurch kann das System einfach vom stark gedämpften in den praktisch ungedämpften Zustand bzw. umgekehrt gebracht werden, wobei der verschiebbare Hohlkörper mit Hilfe einer geeigneten Arretierung, bspw. eines Feststellringes, in der jeweils eingestellten Lage gehalten wird. Zum Abführen der durch die Absorption der Laserstrahlung sowie durch den Spulenstrom entstehenden Wärme dienen im Gesamtsystem in bestimmter Weise angeordnete Hohlräume für den Umlauf einer thermostatisierten Kühlflüssigkeit, so daß die gesamte Anordnung weitgehend temperaturstabil gehalten werden kann.

Nach einer Ausführungsform der Erfindung wird die relative Lage der Platten, d.h. ihr Abstand und ihre Parallelität zueinander mit Hilfe einer kapazitiven Messung kontrolliert bzw. angezeigt. Dabei bildet die metallische Fassung der schwingungsfähigen Optik bzw. die Metallbembran, an der sie befestigt ist, die eine Kondensatorfläche, während die andere durch einen dreigeteilten Metallring, der um die feststehende Optik angeordnet und mit dieser fest verbunden ist, gebildet wird. Jedes Drittel dieses Ringes bildet folglich mit der gegenüberliegenden Metallfläche einen kleinen Kondensator, dessen Kapazität mittels geeigneter elektronischer Mittel gemessen, erforderlichenfalls angezeigt und/oder zur Bildung einer elektronisch beeinflußbaren Stellgröße ausgewertet wird. So ist es nach entsprechender Eichung bspw. möglich, den jeweiligen Abstand der Platten mit einfachen Mitteln zu bestimmen. Durch die erfindungsgemäße Zuordnung der drei Metallringabschnitte zu den drei Justierelementen ergibt sich eine einfache und effektive bspw. manuelle Justierung des Systems.

Weiterhin erfordert eine Überwachung der Schwingungsparameter des Systems lediglich die Darstellung der schnellen Kapazitäts- und damit der Abstandsänderungen bspw. auf einem Oszilloskop. In einer vorteilhaften Ausführungsform der Erfindung werden die Signale der kapazitiven Abstandsmessung nach Vergleich mit einem vorgegebenen Sollwert zur Regelung der Transmission des Modulators genutzt. Einmal ermöglicht diese Regelung die Einstellung und Stabilisierung des Arbeitspunktes des Systems, d.h. des Transmissionszustandes des Modulators bei stromloser Spule. Entweder kann dies ohne irgendwelche Änderung der Position der Justierelemente durch die Regelung der Temperatur der thermostatierten Kühlflüssigkeit erfolgen, wobei die für den Umlauf der thermostatisierten Kühlflüssigkeit im Gesamtsystem vorgesehenen Hohlräume so angeordnet sind, daß über die Einstellung der Temperatur der thermostatierten Kühlflüssigkeit der Abstand zwischen den Platten entsprechend dem geforderten Arbeitspunkt einreguliert werden kann, oder die beschriebene Einstellung und Stabilisierung erfolgt mit Hilfe elektrisch ansteuerbarer Justierelemente, bspw. mit Hilfe von Piezostellern. Zum anderen kann die Schwingungsamplitude des Schwingers elektronisch auf einen vorgegebenen Sollwert geregelt werden, indem über die aus dem Vergleich zwischen Soll- und Istwert für den Abstand folgende Regelgröße der Strom der Schwingerspule einreguliert wird.

Der Modulator gemäß der Erfindung gestattet in Verbindung mit weiteren, unterschiedlichen Anordnungen die Realisierung einer Reihe von bisher nicht oder nur mit einem unvertretbar hohen Aufwand realisierbaren Funktionen.

Zur einfachen Modulation der Strahlung eines $CO_2$-Hochleistungslasers ist folgende Anordnung vorteilhaft. Der Modulator wird außerhalb des Lasers unter einem möglichst kleinen Neigungswinkel seiner optischen Achse zur Achse des Laserstrahles angeordnet. Dieser Winkel wird so gewählt, daß die Funktion des Modulators nicht durch mangelhafte Interferenz beeinträchtigt und daß andererseits das vom Modulator reflektierte Bündel nicht auf den Laserresonator zurückgekoppelt wird. Durch die Anordnung eines zusätzlichen Spiegels für den reflektierten strahlungsanteil kann somit die auf den Modulator auftreffende Strahlung so genutzt werden, daß der transmittierte Strahl des Modulators zur Erfüllung einer Arbeitsaufgabe mit einem vorgegebenen zeitlichen Intensitätsverlauf und der reflektierte Strahl zur Erfüllung einer analogen Arbeitsaufgabe, jedoch mit einem inversen zeitlichen Intensitätsverlauf, genutzt wird.

Diese Grundanordnung kann erweitert werden, indem dem ersten Modulator noch weitere Modulatoren nachgeschaltet und so angeordnet werden, daß der reflektierte Strahlungsanteil des ersten Modulators durch den ersten nachgeschalteten Modulator wiederum in zwei Strahlungsanteile mit einem zueinander inversen zeitlichen Intensitätsverlauf aufgeteilt wird, wobei der reflektierte Strahl direkt weiter verarbeitet und der transmittierte Strahl wahlweise entweder über einen Spiegel umgelenkt und einer Nutzung zugeführt, oder durch einen weiteren Modulator wiederum moduliert und in zwei Strahlungs anteile aufgeteilt wird, so daß bei Verwendung von n Modulatoren insgesamt n + 1 Arbeitsstrahlen entstehen. Durch völlig frei wählbare, bei Bedarf auch unterschiedliche Ansteuerung der einzelnen Modulatoren können mit einer solchen Anordnung die verschiedenartigsten Kombinationen von Arbeitsaufgaben realisiert werden.

Die Transmissionscharakteristik des Modulators gemäß der Erfindung als Funktion des Plattenabstandes ermöglicht in Verbindung mit seinem elektrodynamischen Antriebsprinzip außerdem den vorteilhaften Einsatz einer optisch-elektrischen Rückkopplung geeigneter Dimensionierung, wodurch sowohl Stabilisierungsaufgaben gelöst, als such optisch bistabiles Verhalten der Anordnung erzielt werden können. Dazu wird über einen Strahlteiler (bspw. eine schwach reflektierende Teilerplatte) ein Teil der transmittierten Strahlung einem Detektor zugeführt, dessen Signal über eine geeignete Rückkopplung die Schwingspule des Modulators ansteuert.

Bei entsprechender Wahl des Arbeitspunktes in der Nähe eines Transmissionsmaximums und der elektronischen Signalverstärkung bzw. dem Rückkopplungsgrad kann mit der Anordnung gemäß der Erfindung eine außerordentlich effektive Leistungsstabilisierung erzielt werden. Da die Geschwindigkeit der Stabilisierung dabei praktisch allein durch die Grenzfrequenz des Modulators, welche für typische Ausführungsformen des Modulators im kHz-Bereich liegt, bestimmt wird, können auf diese Weise auch schnelle Schwankungen der Laserleistung stabilisiert werden. Insbesondere kann die Anordnung vorteilhaft zur Stabilisierung von Laserleistungsschwankungen genutzt werden, die bspw. durch die 50 Hz- oder 100 Hz-Welligkeiten einer unvollständig geglätteten Laserversorgungsspannung verursacht werden.

Legt man den Arbeitspunkt des Modulators demgegenüber in die Nähe eines Transmissionsminimums, so ist bei geeigneter Dimensionierung der elektrischen Rückkopplung optisch bistabiles Verhalten des Systems realisierbar. Das bedeutet, daß der Modulator im Zustand der niedrigen Transmission verharrt, so lange das System unbeeinflußt bleibt. Gibt man eine Störung in Form eines kurzen Impulses auf das System (dieser Impuls kann ein der Schwingspule direkt zugeführter elektrischer Impuls oder ein auf den Detektor eingestrahlter zusätzlicher kurzer Strahlungsimpuls sein), so daß der Arbeitspunkt durch die verursachte Auslenkung der schwingungsfähigen Platte über das nächste Transmissionsmaximum gehoben wird, so verbleibt das System im Zustand der so erreichten hohen Transmission, auch wenn die "Störung" von auben wieder abgeklungen ist. Das System befindet sie h dann in seinem zweiten stabilen Zustand, in welchem gleichzeitig die bereits beschriebene Stabilisierungswirkung auftritt. In den ursprünglich eingestellten, unteren Transmissionszustand wird das System bspw. wieder durch einen elektrischen Impuls mit umgekehrtem Vorzeichen gebracht.

Ausführungsbeispiel

Die Erfindung soll nachstehend an einem Ausführungsbeispiel näher erläutert werden.
In den zugehörigen Zeichnungen zeigen:

Fig. 1:    einen Schnitt durch den M odulator gemäß der Erfindung;

Fig. 2:    die Schwingungsamplitude x der schwingungsfähigen Platte des Modulators als Funktion der Frequenz f eines definierten sinusförmigen Anregungsstromes für den völlig ungedämpften Fall (a) und den optimal gedämpften Fall (b):

Fig. 3:    das Dämpfungssystem des Modulators zur Verstellung der Dämpfung;

Fig. 4:    den Regelkreis zur elektronischen Regelung der Modulatortransm-ission mit Hilfe der kapazitiven Messung des Plattenbestandes;

Fig. 5:    eine Anordnung zur externen Modulation der Laserstrahlung;

Fig. 6:    eine Anordnung zur externen Vielfach-Modulation von Laserstrahlung;

Fig. 7:    den Modulator mit optisch-elektrischer Rückkopplung;

Fig. 8:    die Arbeitspunkte AP 1 für effektive Stabilisierung der transmittierten Leistung und AP 2 für optisch bistabiles Verhalten des Modulators mit optisch-elektrischer Rückkopplung;

Fig. 9:    die transmittierte Leistung $P_T$ als Funktion der Eingangsleistung $P_O$ bei stabilisierender Wirkung des Modulators mit optisch-elektrischer Rückkopplung:

Fig. 10:    die transmittierte Leistung $P_T$ als Funktion der Eingangsleistung $P_O$ bei optisch bistabilem Verhalten des Modulators mit optischelektrischer Rückkopplung.

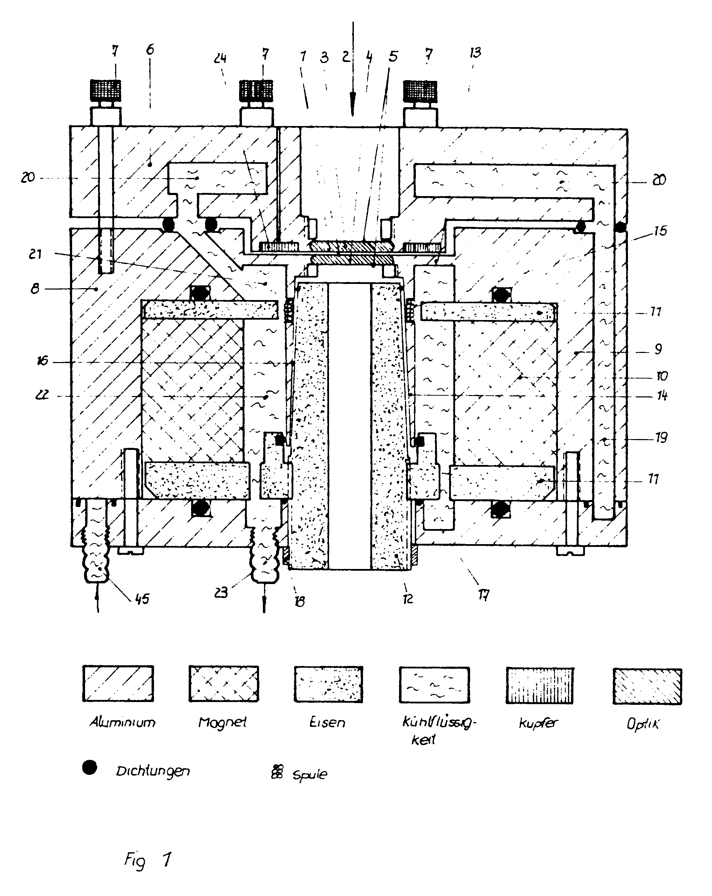

In dem in Fig. 1 dargestellten Ausführungsbeispiel des erfindungsgemäßen Modulators bilden die einander zugewandten und verspiegelten, ebenen Flächen 1 der für die Laserstrahlung 2 transparenten Platten 3 und 4, deren Rückseite 5 entspiegelt sind, die Interferometeranordnung. Die Platte 3 ist fest verbunden mit dem Oberteil 6 des Gerätegrundkörpers, das mittels der drei Justierschrauben 7 gegen das massive Unterteil 8 des Gerätegrundkörpers justiert werden kann, wodurch Abstand und Parallelität der zwei Platten 3;4 zueinander eingestellt wird. Das Unterteil 8 des Gerätegrundkörpers besteht im wesentlichen aus einem schwingungsstabilen Gehäuse 9, das den starken Permanentmagneten 10 einschließlich der magnetischen Leiteisen 11 und des verschiebbaren Hohlkörpers 12, vorzugsweise des Eisenkerns des Permanentmagneten (10) umschließt. Diese stabile Einheit bildet die Basis für das schwingungsfähige System, das aus der elastischen Membran 13, an welcher die Platte 4 befestigt ist, und einem Spezialhohlzylinder 14, der eine Spule 15 trägt, besteht. Dieses schwingungsfähige System gewährleistet, daß entsprechend einer vorgegebenen, an die Spule 15 angelegten Steuerspannung der Abstand der Platten 3; 4 zueinander und damit die Transmission des Modulators dadurch geändert wird, daß es einerseits angetrieben wird durch die elektromagnetische Wechselwirkung zwischen dem Permanentmagneten 10 und der vom Steuerstrom durchflossenen Spule 15, die sich im Luftspalt zwischen den Polen des Permanentmagneten 10 befindet, und andererseits gedämpft wird durch die Reibungskraft, die mittels eines hochviskosen mediums 16 erzeugt wird, das sich im Spalt zwischen dem Spezialhohlzylinder 14 und dem Hohlkörper 12 befindet, der vorzugsweise vom Eisenkern des Elektromagneten 10 gebildet wird.

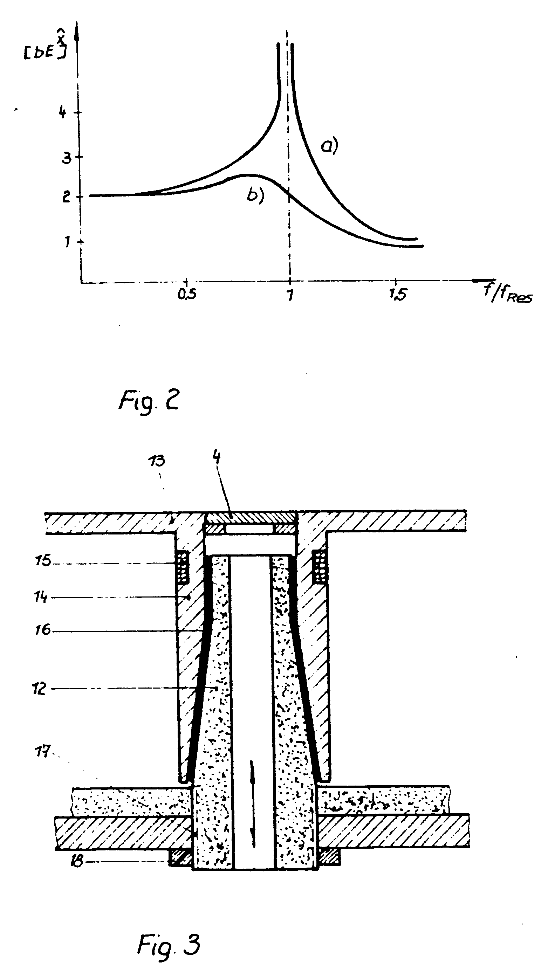

Figur 2 zeigt das Schwingungsverhalten dieses Systems für zwei typische Fälle. Die mit a) bezeichnete Kurve zeigt die Abhängigkeit der Auslenkung von der Frequenz f eines definierten, sinusförmigen Anregungsstromes für den Fall der völlig ungedämpften Schwingung, die mit b) bezeichnete Kurve zeigt das gleiche für die optimal gedämpfte Schwingung, bei der annähernd gleiche Auslenkungen für alle Frequenzen zwischen f = 0 und f = $f_{Res.}$ erzielt werden. Der Fall b), der für die Anwendung des Gerätes als frei ansteuerbarer Modulator von entscheidender Bedeutung ist, wird erfindungsgemäß durch eine Anordnung gemäß Figur 3 realisiert. Figur 3 zeigt, daß die Innenfläche des Spezialhohlzylinders 14 im für die Dämpfung wirksamen Bereich und die Außenfläche des als Gegenstück fungierenden Hohlkörpers 12 schwach konisch mit identischer Steigung ausgebildet sind, so daß die effektive Breite des mit dem hochviskosen Dämpfungsmedium 16 ausgefüllten Spaltes zwischen diesen beiden Flächen durch geringe Verschiebung des Hohlkörpers 12 längs seiner Achse so verändert werden kann, daß das System auf diese Weise einfach vom stark gedämpften in den praktisch ungedämpften Schwingungszustand bzw. umgekehrt gebracht werden kann. Diese definierte Längsverschiebung des Hohlkörpers 12 erfolgt durch Herein- bzw. Herausschrauben mit Hilfe eines Präzisionsgewindes 17, seine Arretierung mittels eines Feststellringes 18. Die Viskosität dem Dämpfungsmediums 16 wird dabei auf die Parameter des schwingungsfähigen Systems (insbesondere die effektive Federkonstante und Wasse sowie das gewählte Intervall der Spaltbreite zwischen dem Hohlkörper 12 und dem Spezialhohlzylinder 14) abgestimmt.

Der gesamte Modulator wird durch eine Umlaufkühlung thermisch stabil gehalten. Nach dem Eintritt 45 gelangt die thermostatierte Kühlflüssigkeit über Kanäle 19 in Kühlbohrungen 20 des Oberteiles 6 des Gerätegrundkörpers, wodurch die Platte 3 gekühlt wird. Anschließend strömt sie durch die Kammer 21, wobei die in der Platte 4 absorbierte Strahlungsleistung und beim darauffolgenden Umströmen der Spule 15 die hier entstehende Stromwärme abgeführt werden. Nach Passieren der Kammer 22 gelangt die Kühlflüssigkeit an den Austritt 23.

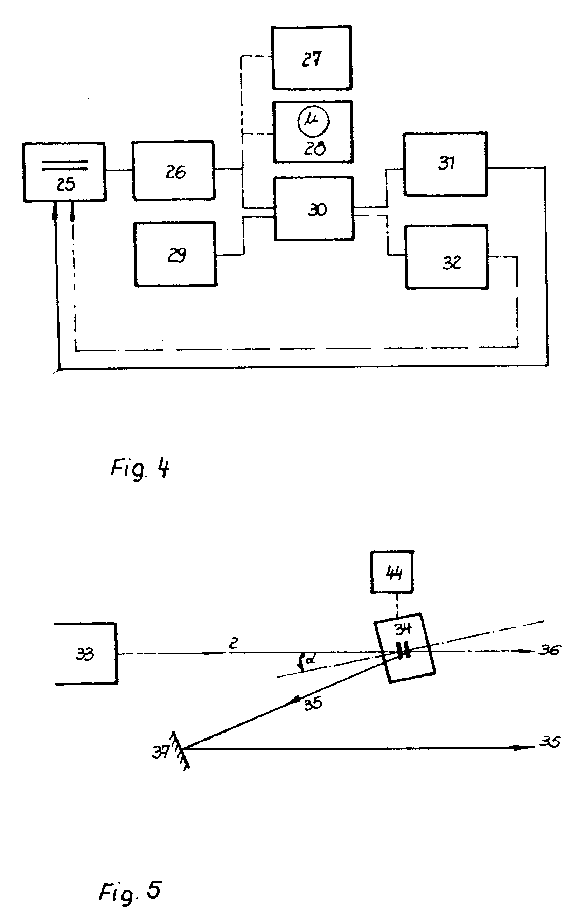

Die kapazitive Messung der relativen Lage der Platten 3 und 4 zueinander erfolgt, indem mittels einer geeigneten elektronischen Anordnung die Kapazitäten der drei kleinen Kondensatoren 25, die durch die elastische Membran 13, die wie der gesamte Geräte-Grundkörper auf Massepotential liegt, und die drei Kupferring-Abschnitte 24, die kreisförmig um die feststehende Platte 3 angeordnet sind, gebildet werden. Figur 4 zeigt das Prinzip der Messung und Regelung des Plattenabstandes der Platten 3; 4. Die Kapazität des Systems Kupferplatten 24 - Membran 13 wird mit Hilfe des Elektronikbausteines 26 erfaßt und in ein Meßsignal umgewandelt, das entweder statisch durch das Meßgerät 27 oder dynamisch durch ein Oszilloskop 28 dargestellt werden kann. Leitet man aus dem Meßsignal durch Vergleich mit einer mit Hilfe des Bausteins 29 definierten Sollgröße im Elektronikbaustein 30 eine Regelgröße ab, so kann diese entweder genutzt werden, um mittels einer Regelung 31 der Kühlflüssigkeitstemperatur den Arbeitspunkt des Systems einzustellen und zu stabilisieren, oder mittels einer Regelung 32 des Stromes der Schwingerspule 15 die Schwingungsamplitude der Platte 4 auf einen vorgegebenen Sollwert zu regeln.

Die Figuren 5 bis 10 zeigen die unterschiedlichen Anordnungen bzw. neuartigen Funktionen, die mit dem Modulator gemäß der Erfindung realisiert werden können.

Figur 5 zeigt die Grundanordnung zur externen Modulation von Laserstrahlung. Die Strahlung 2 des Lasers 33 fällt auf den mittels der elektrischen Versorgungseinrichtung 44 angesteuerten Modulator 34, dessen optische Achse unter einem kleinen Winkel gegen die Achse des Laserstrahles 2 verkippt ist, so daß Rückkopplungseffekte mit dem Laser vermieden werden und der vom Modulator reflektierte Anteil 35 der Laserstrahlung 2 mit dem Spiegel 37 aufgefangen werden kann. Auf diese Weise erhält man zwei Arbeitsstrahlen, und zwar den transmittierten Anteil 36 und den reflektierten Anteil 35, die zeitlich inverses Verhalten der Intensitätsmodulation zeigen.

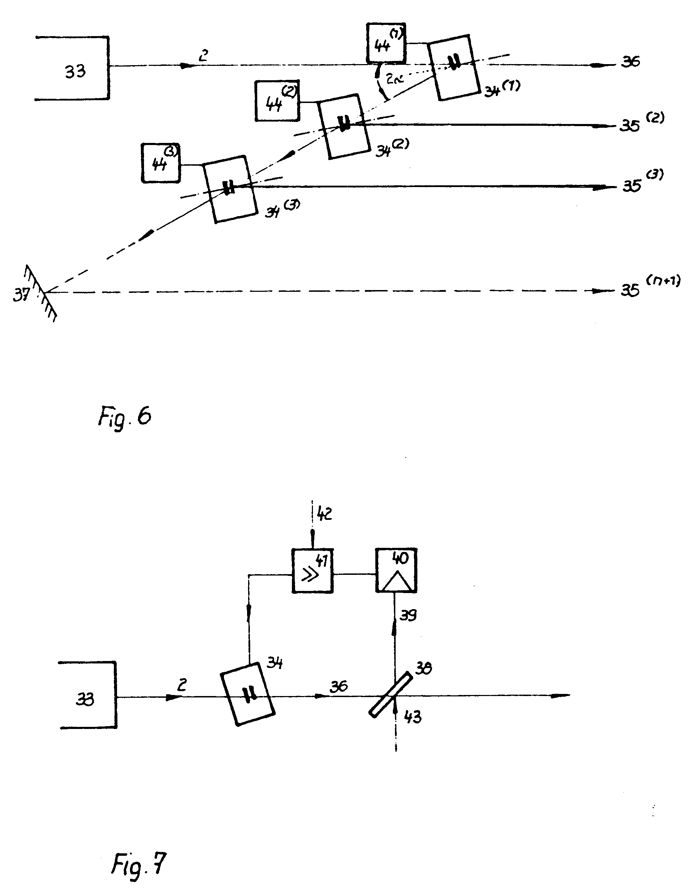

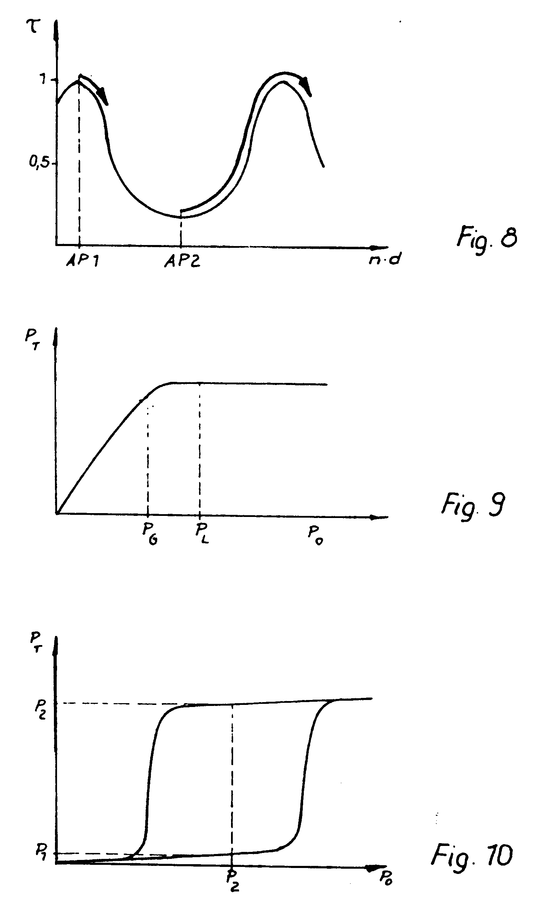

Eine Weiterführung des Grundaufbaus für spezielle Arbeitsaufgaben zeigt Figur 6. Die kaskadenförmige Anordnung der Modulatoren 34.1, 34.2 ....., 34.n, deren Achsen ebenfalls um den kleinen Winkel $\alpha$ gegen die jeweilige Strahlachse verkippt sind, liefert n + 1 Arbeitsstrahlen 36, 35.2 ....... 35. (n + 1), die bei entsprechender Ansteuerung der Modulatoren die Realisierung der untersehiedlichsten Arbeitsaufgaben gestatten.

Den Einsatz des Modulators gemäß der Erfindung zur externen Modulation von Laserstrahlung bei optisch-elektrischer Rückkopplung zeigt Figur 7. Der transmittierte Anteil 36 der vom Laser ausgeandten Strahlung 2 fällt auf eine Teilerplatte 38, die aus transparentem Material besteht und die relativ geringe Reflektivität aufweist. Der von dieser Platte reflektierte Anteil 39 verhältnismäßig niedriger Leistung wird von einem Detektor 40, der vorzugsweise eine kleine Zeitkonstante in der Größenordnung 10 $\mu$s aufweist, registriert, das resultierende elektrische Signal im elektronischen Verstärker 41 verstärkt und damit die Spule 15 des Modulators 34 angesteuert. Diese optisch-elektrische Rückkopplung und damit die Funktion des Modulators kann zusätzlich durch externe elektrische Signale 42 oder externe optische Signale 43 beeinflußt werden.

Die dargestellte Anordnung gestattet die Realisierung einer Reihe von Funktionen. Zwei Funktionen, die für Applikationen von besonderer Bedeutung sind, zeigen die Figuren 8, 9 und 10:
- die effektive Stabilisierung des transmittierten Anteiles 36 der Strahlung für Modulatortransmissionen nahe 1;
- das optisch bistabile Verhalten des Modulators.

Figur 8 zeigt die Lage der entsprechenden Arbeitspunkte auf der Transmissionskurve des Modulators. Der Arbeitspunkt AP1 wird für die Stabilisierung eingestellt. Der Pfeil charakterisiert die Richtung der Modulator-Durchstimmung bei Erhöhung der auf den Modulator auftreffenden Strahlungsleistung. Die Wirkung der Durchstimmung zeigt Figur 9, nämlich die Stabilisierung der Leistung $P_T$ des transmittierten Strahles 36, wenn die Leistung $P_O$ des einfallenden Strahles über einen Wert $P_C$, der insbesondere von der Rückkopplung abhängt, liegt.

Die Rückkopplung wird vorteilhaft so eingestellt, daß die zu stabilisierende Laserleistung $P_L$ etwa die in Figur 9 dargestellte Position auf der $P_T(P_O)$-Charakteristik hat.

Der Arbeitspunkt AP2 wird eingestellt, wenn die Anordnung gemäß der Erfindung optisch bistabiles Verhalten zeigen soll. Auch hier charakterisiert der Pfeil die Richtung der Modulatordurchstimmung bei wachsender Eingangsleistung $P_O$. Figur 10 zeigt die für optisch bistabiles Verhalten typische Hysterese der $P_T(P_O)$-Charakteristik. Vorteilhafterweise werden die Parameter des Systems, insbesondere wieder die Rückkopplung, so eingestellt, daß die zu schaltende Laserleistung $P_L$ die in Figur 10 dargestellte Lage auf der $P_L(P_O)$-Charakteristik hat. Dann kann das System durch optische oder elektrische Steuersignale 43; 42 zwischen den Werten $P_1$ und $P_2$ für die transmittierte Leistung hin- und hergeschaltet werden.

## Patentansprüche

1. Anordnung zur externen Modulation von $CO_2$-Laser-Strahlung hoher Leistung mit einen Modulator aus zwei planparallel zueinander angeordneten, einen Spalt definierter Breite bildenden, auf beiden Seiten ebenen Platten aus einem für die Laserstrahlung transparenten Material (bspw. Ge, GaAs oder ZnSe), deren einander zugewandte Innenflächen verspiegelt und deren Außenflächen entspiegelt sind und deren Abstand zueinander variiert werden kann, gekennzeichnet dadurch, daß eine der beiden Platten (3)(vorzugsweise über geeignete Justierelemente zur Einstellung des planparallel AbStandes zur anderen Platte (4), bspw. Justierschrauben (7)) mit einem massiven Grundkörper, der aus einem starken Permanentmagneten (10) einschließlich der zugehörigen magnetischen Leiteisen (11) und einem schwingungsstabilen Gehäuse (9) gebildet wird, fest verbunden ist, während die andere Platte (4) gemeinsam mit einem Hohlzylinder (14), der an einer elastischen Membran (13) befestigt ist, ein relativ zum Grundkörper schwingungsfähiges System bildet, das einerseits angetrieben wird durch die elektromagnetische Wechselwirkung zwischen dem Permanentmagneten (10) und einer von einem Steuerstrom durchflossenen Spule (15), die auf dem Hohlzylinder (14) angebracht ist und sich im Luftspalt zwischen den Polen des Permanentmagneten (10) befindet, und das andererseits gedämpft wird durch die Reibungskraft eines Dämpfungsmediums (16) definiert hoher Viskosität, das sich im Spalt zwischen der Innenfläche des Hohlzylinders (14) und der Außenfläche eines fest mit dem. Grundkörper verbundenen Hohlkörpers (12)(vorzugsweise dem Kern des Permanentmagneten (10)) befindet, wobei die Breite des Spaltes und die Viskosität des hochviskosen Dämpfungsmediums (16) so aufeinander abgestimmt werden, daß die für die Dämpfung erforderliche Reibungskraft eingestellt werden kann, und wobei im Gesamtsystem Hohlräume (19; 20; 21; 22) für den Umlauf einer thermostatisierten Kühlflüssigkeit vorgesehen sind, mit deren Hilfe die durch die absorbierte Laserstrahlung sowie den Spulenstrom entstehende Wärme abgeführt und die gesamte Anordnung temperaturstabil gehalten wird.

2. Anordnung zur externen Modulation von $CO_2$-Laser-Strahlung hoher Leistung nach Anspruch 1, gekennzeichnet dadurch, daß die Innenfläche des Hohlzylinders (14) im für die Dämpfung wirksamen Bereich und die Außenfläche des als Gegenstück fungierenden Hohlkörpers (12) schwach konisch mit identischer Steigung in Richtung der Modulatorachse ausgebildet sind, so daß durch eine relativ geringe Verschiebung des Hohlkörpers (12), bspw. mit Hilfe eines Präzisionsgewindes (17), längs seiner Achse die effektive Breite des mit dem hochviskosen Dämpfungsmedium (16) ausgefüllten Spaltes zwischen dem Hohlzylinder (14) und dem Hohlkörper (12) variiert, damit die Dämpfungscharakteristik vom stark gedämpften in den praktisch ungedämpften Zustand bzw. umgekehrt gebracht und mit Hilfe einer Arretierung, bspw. eines Feststellringes (18), in der jeweils eingestellten Lage gehalten wird.

3. Anordnung zur externen Modulation von $CO_2$-Laser-Strahlung hoher Leistung nach Anspruch 1, gekennzeichnet dadurch, daß eine metallische Fassung der schwingungsfähigen Platte (4) bzw. die Metallmembran (13), an der sie befestigt ist, einerseits und die drei Abschnitte (24) eines dreigeteilten Metallringes, der die feststehende Platte (3) umschließt, andererseits so angeordnet sind, daß sich drei gleich große Kondensatoren (25) ergeben, die je einem der für die Justierung der fest angeordneten Platte (3) vorgesehenen Justierelemente (7) zugeordnet werden und deren Kapazität in an sich bekannter Weise zur Messung des Abstandes und/oder der Parallelität der Platten (3; 4) ausgenutzt wird.

4. Anordnung zur externen Modulation von $CO_2$-Laser-Strahlung hoher Leistung, nach Anspruch 3, gekennzeichnet dadurch, daß der von den Kondensatoren (25) gelieferte Meßwert mittels eines Elektronikbausteines (26) erfaßt, mit dem mit Hilfe des Bausteines (29) definierten Sollwert im Elektronikbaustein (30) verglichen und vom Elektronikbaustein (30) als Differenzsignal bereitgestellt wird, das wie folgt ausgewertet werden kann:

- als Führungsgröße für eine Regelung (31) zur Einstellung des Transmissionszustandes des Modulators bei stromloser Spule durch Veränderung des Abstandes zwischen den Platten (3; 4) durch
  a) direkte Beeinflussung mit Hilfe von elektrisch ansteuerbaren Justierelementen (7), bspw. Piezostellern, oder
  b) indirekte Beeinflussung ohne irgendwelche Veränderung der Position der Justierelemente (7), durch geeignete Veränderung der Temperatur der thermostatisierten Kühlflüssigkeit, wobei die für den Umlauf der thermostatisierten Kühlflüssigkeit im Gesamtsystem vorgesehenen Hohlräume (19; 20; 21; 22) so angeordnet werden, daß über die Veränderung der Temperatur eine gleichmäßige Verstellung des Plattenabstandes gewährleistet ist;
- als Führungsgröße für eine Regelung (32), mit deren Stellsignal die Schwingungsamplitude der schwingungsfähigen Platte (4) durch Ansteuerung des Stromes der Schwingerspule (15) eingestellt wird.

5. Anordnung zur externen Modulation von $CO_2$-Laser-Strahlung hoher Leistung nach einem der Ansprüche 1 bis 4, gekennzeichnet dadurch, daß der Modulator (34) zum $CO_2$-Hochleistungslaser bezüglich seiner optischen Achse in einem Winkel angeordnet wird, der einerseits so klein ist, daß die Interferenzfähigkeit des Systems nur unwesentlich beeinfluß wird; und der andererseits so groß ist, daß eine unerwünschte Rückkopplung des vom Modulator reflektierten Strahlungsanteiles (35) mit dem Laserresonator ohne die Verwendung optischer Hilfsmittel mit Sicherheit vermieden wird, wobei der reflektierte Strahlungsanteil (35) mittels eines Zusätzlichen Spiegels (37) aufgefangen und gezielt weitergeleitet wird, so daß damit beide vom Modulator gelieferten Strahlen (35; 36) für Vorgegebene Aufgaben genutzt werden können, und zwar der transmittierte Strahl (36) zur Erfüllung einer Arbeitsaufgabe bspw. mit einem vorgegebenen zeitlichen Intensitätsverlauf sowie der reflektierte Strahl (35) zur Erfüllung einer analogen Arbeitsaufgabe, jedoch mit einen zum transmittierten Strahl (36) inversen zeitlichen Intensitätsverlauf.

6. Anordnung zur externen Modulation von $CO_2$-Laser-Strahlung hoher Leistung nach einem der Ansprüche 1 bis 4, gekennzeichnet dadurch, daß mehrere Modulatoren (34) so angeordnet sind, daß der reflektierte Strahl eines ersten Modulators (34.1) von einem zweiten Modulator (34.2) wiederum moduliert wird, dessen reflektierter Strahl (35.2) für vorgegebene Arbeitsaufgaben ausgenutzt wird und dessen transmittierter Strahl wahlweise entweder durch einen Spiegel (37) umgelenkt und ebenfalls entsprechend ausgenutzt, oder durch einen weiteren Modulator (34.3) wiederum moduliert und in zwei Strahlen mit zeitlich zueinander inverser Intensität geteilt wird, so daß in Abhängigkeit von der Anzahl der nachgeschalteten Modulatoren (34.2 bis 34.n) insgesamt n + 1 Arbeitsstrahlen entstehen, die durch die frei wählbare, bei Bedarf auch unterschiedliche Ansteuerung der einzelnen Modulatoren (34.1 bis 34.n) die Realisierung der verschiedenartigsten Kombinationen von Arbeitsaufgaben ermöglicht.

7. Anordnung zur externen Modulation von $CO_2$-Laser-Strahlung hoher Leistung nach einem der Ansprüche 1 bis 6, gekennzeichnet dadurch, daß eine relativ schwach reflektierende Teilerplatte (38) so in dem von einem Modulator (34) transmittierten Strahl (36) angeordnet wird, daß ein kleiner Teil der Strahlung auf einen Detektor (40) mit genügend kleiner Zeitkonstante ($\tau \leq 100~\mu s$) gelenkt wird, dessen Ausgangssignal durch einen elektronischen Verstärker (41) verstärkt und als Rückkopplungssignal zur Steuerung der Modulatorspule (34) verwendet wird, wobei der Anordnung durch zusätzliche elektrische Signale, die dem Verstärker (41) und/oder optische Signale, die dem Detektor (40) zugeführt werden, in Abhängigkeit von der Einstellung des Transmissionszustandes des Modulators bei stromloser Spule, die mittels der Justierelemente (7) oder mit Hilfe der Temperatur der thermostatisierten Kühlflüssigkeit erfolgen kann, und der Größe der Rückkopplung eine Charakteristik aufgeprägt werden kann, die eine Nutzung Vorzugsweise zur Stabilisierung der transmittierten Strahlungsleistung einerseits bzw. zur Realisierung optisch bistabilen Verhaltens andererseits ermöglicht.

**Claims**

1. Arrangement for the external modulation of high-power $CO_2$ laser radiation, with a modulator comprising two plates which are plane at both sides, define a gap of specific width, are arranged in plane parallel situations relatively to one another, are made of a material transparent to the laser radiation (for example Ge, GaAs or ZnSe), and whose inner surfaces facing towards one another are covered with a reflective coating and whose outer surfaces are de-reflected, and whose spacing from one another can be varied, characterised in that one of the two plates (3) is securely connected (preferably by means of suitable adjusting elements for adjusting the plane-parallel spacing from the other plate (4), for example adjusting screws (7)) to a solid base element which comprises a strong permanent magnet (10) including the associated magnetic conductive iron (11) and an oscillation-stable housing (9), whereas the other plate (4) forms jointly with a hollow cylinder (14) secured to an elastic diaphragm (13) a system which is oscillatable relatively to the base element and which on the one hand is driven by the electromagnetic interaction between the permanent magnet (10) and a coil (15) through which a control current flows and which is arranged on the hollow cylinder (14) and is situated in the air gap between the poles of the permanent magnet (10), which system on the other hand is damped by the frictional force of a damping medium (16) of specifically high viscosity situated in the gap between the inner surface of the hollow cylinder (14) and the outer surface of a hollow element (12)(preferably the core of the permanent magnet (10)) connected securely to the base element, wherein the width of the gap and the viscosity of the high-viscosity damping medium (16) are so adapted to one another that the frictional force required for damping can be adjusted, and wherein in the general system hollow spaces (19, 20, 21, 22) are provided for the circulation of a thermostatically controlled cooling liquid with the help of which the heat produced by the absorption of laser radiation and by the coil current is discharged and the overall arrangement kept at stable temperature.

2. Arrangement for the external modulation of high-power $CO_2$ laser radiation according to claim 1, characterised in that the inner surface of the hollow cylinder (14) in the region effective for damping, and the outer surface of the hollow element (12) acting as a cooperating element, are formed to be slightly conical with identical inclination in the direction of the modulator axis, so that by a relatively slight displacement of the hollow element (12), for example by means of a precision screwthread (17), along its axis the effective width of the gap filled with the high-viscosity damping medium (16) between the hollow cylinder (14) and the hollow element (12) is varied, so that the damping characteristic is brought from the strongly damped to the substantially non-damped state or vice versa, and held in the particular position set with the use of an arresting element, for example a locking ring (18).

3. Arrangement for the external modulation of high-power $CO_2$ laser radiation according to claim 1, characterised in that a metal mount of the oscillatable plate (4) or the metal diaphragm (13) to which it is secured, on the one hand, and the three segments (24) of a metal ring divided in three which surrounds the stationary plate (3), on the other hand, are so arranged that as a result there are three capacitors (25) of like size which are each associated with one of the adjusting elements (7) provided for the adjustment of the stationary-arranged plate (3), and whose capacitance is used in a manner known per se for measuring the spacing and/or the parallelism of the plates (3, 4).

4. Arrangement for the external modulation of high-power $CO_2$ laser radiation, according to claim 3, characterised in that the measurement value supplied by the capacitors (25) is ascertained by means of an electronic component (26), compared in the electronic component (30) with the desired value defined with the aid of component (29), and provided by the electronic component (30) as a difference signal, which can be evaluated as follows :

- as a command variable for a control arrangement(31) for the adjusting of the transmission state of the modulator when the coil is not energised by varying the spacing between the plates (3, 4)
  a) by direct influencing with the use of electrically operatable adjusting elements (7), for example piezo positioners, or
  b) by indirect influencing without any changing of the position of the adjusting elements (7), by appropriate modification of the temperature of the thermostatically controlled cooling liquid, the hollow spaces (19, 20, 21, 22) provided for the circulation of the thermostatically controlled cooling liquid in the general system being so arranged that varying the temperature ensures uniform adjustment of the plate spacing;
- as a command variable for a control arrangement(32) with whose regulating signal the oscillation amplitude of the oscillatable plate (4) is adjusted by operating the current of the resonator coil (15).

5. Arrangement for the external modulation of high-power $CO_2$ laser radiation according to one of claims 1 to 4, characterised in that the modulator (34) is arranged relatively to the $CO_2$ high-power laser as regards its optical axis at an angle which on the one hand is sufficiently small that the interference ability of the system is influenced only to an unsubstantial extent, and which on the other hand is sufficiently great as to obviate reliably an undesired feedback of that portion of the radiation (35) which is reflected by the modulator with the laser resonator without the use of optical aids, and the reflected radiation portion (35) is collected by means of an additional mirror (37) and transmitted onwards in controlled fashion, so that as a result both beams (35, 36) delivered by the modulator can be used for predetermined objects, in fact the transmitted beam (36) for performing a work task for example with a preset time intensity pattern, and the reflected beam (35) for performing a similar work task but with a time intensity pattern in inverse relationship to the transmitted beam (36)

6. Arrangement for the external modulation of high-power $CO_2$ laser radiation according to one of claims 1 to 4, characterised in that a plurality of modulators (34) are so arranged that the reflected beam of a first modulator (34.1) is modulated again by a second modulator (34.2), whose reflected beam (35.2) is used for predetermined work tasks, and whose transmitted beam is selectively either deflected by a mirror (37) and likewise used appropriately, or modulated again by a further modulator (34.3) and divided into two beams of inverse intensity relatively to one another in respect of time, so that in dependence on the number of sequentially arranged modulators (34.2 to 34.n) a total of n + 1 working beams are produced, allowing the carrying out of the most varied combinations of work tasks through the freely selectable, if necessary differing, operating of the individual modulators (34.1 to 34.n).

7. Arrangement for the external modulation of high-power $CO_2$ laser radiation according to one of claims 1 to 6, characterised in that a relatively weakly reflecting divider plate (38) is arranged in such a manner in the beam (36) transmitted by a modulator (34) that a small portion of the radiation is directed to a detector (40) with a sufficiently small time constant ($\tau \leq 100~\mu s$), whose output signal is amplified by an electronic amplifier (41) and is used as a feedback signal for controlling the modulator coil (34), and the arrangement, through additional electrical signals which are fed to the amplifier (41) and/or optical signals which are fed to the detector (40), in dependence on the adjustment of the transmission state of the modulator when the coil is not energised, which can be effected by means of the adjusting elements (7) or through the temperature-of the thermostatically controlled cooling liquid, and the amount of feedback, can have imposed on it a characteristic which allows utilisation preferably for the stabilising of the transmitted radiation power on the one hand and for the achievement of optically bistable behaviour on the other hand, respectively.

**Revendications**

1. Agencement de modulation externe du rayonnement d'un laser à $CO_2$ de grande puissance comportant un modulateur composé de deux lames planes sur les deux faces en un matériau transparent au rayonnement laser (par exemple Ge, GaAs ou ZnSe), disposées avec leurs plans parallèles l'un à l'autre pour réaliser une fente de largeur définie, dont les surfaces intérieures tournés l'une vers l'autre sont réfléchissantes et les surfaces extérieures sont rendues non réfléchissantes et dont on peut faire varier l'écartement l'une par rapport à l'autre, caractérisé en ce que l'une (3) des deux lames est rendue rigidement solidaire [de préférence au moyen d'éléments de réglage pour régler l'écartement en parallélisme des plans, par rapport à l'autre lame (4), par exemple des vis de réglage (7)] avec un corps de base massif composé d'un puissant aimant permanent (10) y inclut des fers (11) formant conducteurs magnétiques et un corps (9) stable à l'égard des vibrations, pendant que l'autre lame (4) constitue, avec un cylindre creux (14) qui est fixé à une membrane élastique (13), un système capable d'osciller par rapport au corps de base, ledit système étant animé, d'une part, par l'effet électromagnétique alterné entre l'aimant permanent (10) et une bobine (15) traversée par un courant de commande et qui est fixée sur le cylindre creux (14) et se trouve dans l'entrefer entre les pôles de l'aimant permanent (10) et qui, d'autre part, est amorti par la force de friction d'un fluide d'amortissement (16) d'une viscosité élevée définie, qui se trouve dans l'intervalle entre la surface intérieure du cylindre creux (14) et la surface extérieure d'un corps creux (12) rigidement relié au corps de base [de préférence le noyau de l'aimant permanent (10)], dans lequel la largeur de l'intervalle et la viscosité du fluide d'amortissement (16) à haute viscosité sont adaptées l'une à l'autre de telle façon que l'on puisse régler la force de friction nécessaire pour cet amortissement, et dans lequel sons prévus, dans tout le système, des espaces creux (19, 20, 21, 22) pour la circulation d'un liquide de refroidissement thermostaté, au moyen duquel la chaleur générée par le rayonnement laser absorbé et par le courant dans la bobine est évacuée et l'ensemble de l'agencement est maintenu à une température stable.

2. Agencement de modulation externe du rayonnement d'un laser à $CO_2$ de grande puissance selon la revendication 1, caractérisé en ce que la surface intérieure du cylindre creux (14) dans sa zone efficace pour l'amortissement ainsi que la surface extérieure du corps creux (12) faisant fonction de contre-pièce présentent une configuration légèrement conique avec la même conicité dans la direction de l'axe du modulateur de telle façon qu'au moyen d'un léger déplacement relatif du corps creux (12), par exemple au moyen d'un filetage de précision (17) le long de son axe, on puisse faire varier la largeur effective de l'intervalle rempli d'un fluide d'amortissement (16) à haute viscosité, entre le cylindre creux (14) et le corps creux (12), afin d'amener la caractéristique d'amortissement de l'état fortement amorti à l'état pratiquement non amorti, et vice versa, et de la maintenir dans cette position de réglage à l'aide d'un moyen d'arrêt, tel qu'un anneau d'arrêt (18).

3. Agencement de modulation externe du rayonnement d'un laser à $CO_2$ de grande puissance selon la revendication 1, caractérisé en ce qu'un montage métallique, d'une part, de la lame (4) susceptible de vibrer ou, respectivement de la membrane métallique (13) à laquelle elle est fixée, et d'autre part, les trois tronçons (24) d'un anneau métallique en trois parties qui entourent la lame fixe (3) sont disposés de façon à réaliser trois condensateurs (25) de même taille, chacun étant associé à un élément de réglage (7) prévu pour le réglage de la lame (3) disposée fixe, et dont la capacité est exploitée de façon connue pour mesurer l'écartement et/ou le parallélisme des lames (3, 4).

4. Agencement de modulation externe du rayonnement d'un laser à $CO_2$ de grande puissance selon la revendication 3, caractérisé en ce que les valeurs mesurées fournies par les condensateurs (25) sont reçues par un bloc électronique (26) et sont comparées avec une valeur de consigne définie dans un bloc électronique (30) à l'aide du bloc (29), le bloc électronique (30) fournissant un signal différentiel susceptible d'être exploité comme suit:

- comme valeur de commande du réglage (31), pour régler l'état de transmission du modulateur en l'absence de courant dans la bobine par variation de l'écartement entre les lames (3, 4) par

(a) une influence directe au moyen d'éléments de réglage à commande électrique (7), par exemple des éléments de réglage piézo-électriques, ou

(b) une influence indirecte sans un changement quelconque de la position des éléments de réglage (7) réalisée par variation appropriée de la température du liquide de refroidissement thermostaté, les espaces vides (19, 20, 21, 22) prévus dans tout le système pour la circulation du liquide de refroidissement thermostaté étant disposés de telle manière que, par variation de la température, on assure un réglage uniforme de l'écartement des lames;

- comme valeur de commande pour un système de réglage (32) avec le signal de réglage duquel on règle l'amplitude de vibration de la lame (4) susceptible de vibrer par commande du courant de la bobine d'oscillation (15).

5. Agencement de modulation externe du rayonnement d'un laser à $CO_2$ de grande puissance selon l'une des revendications 1 à 4, caractérisé en ce que le modulateur (34) du laser à $CO_2$ à grande puissance, en ce qui concerne l'axe optique de celui-ci, est disposé dans un angle qui, d'une part, est tellement petit que la capacité d'interférence du système n'est influencée que de façon négligeable et qui, d'autre part, est suffisamment grand pour éviter, de façon sûre, une contre-réaction intempestive de la partie du rayonnement réfléchi (35) par le modulateur avec le résonateur du laser sans utiliser de moyens optiques supplémentaires, la partie de rayonnement réfléchi (35) étant reçue et réinjectée de façon dirigée au moyen d'un miroir supplémentaire (37), de telle façon que l'on puisse utiliser les deux faisceaux (35, 36) fournis par le modulateur pour des tâches prédéterminées, à savoir le faisceau transmis (36) pour réaliser une tâche de travail, par exemple avec une évolution temporelle prédéterminée de son intensité, et le faisceau réfléchi (35) pour réaliser une tâche de travail analogue avec, cependant, une évolution d'intensité qui est inversée temporellement par rapport à celle du faisceau transmis (36).

6. Agencement de modulation externe du rayonnement d'un laser à $CO_2$ de grande puissance selon l'une des revendications 1 à 4, caractérisé en ce que plusieurs modulateurs (34) sont disposés de façon que le faisceau réfléchi d'un premier modulateur (34.1) soit de nouveau modulé par un deuxième modulateur (34.2), dont le faisceau réfléchi (35.2) est exploité pour des tâches de travail prédéterminées et dont le faisceau transmis puisse sélectivement être soit dévié par un miroir (37) et également exploité de manière correspondante, soit modulé de nouveau par un modulateur supplémentaire (34.3) et divisé en deux faisceaux avec des intensités qui sont temporellement inverses l'une de l'autre, de manière à ce qu'en fonction du nombre de modulateurs (34.2 à 34.n) agencés l'un après l'autre, il en résulte n + 1 faisceaux de travail permettant, de manière à être sélectionné librement, la réalisation de combinaisons de la plus grande diversité des tâches de travail, en commandant, si nécessaire, de façon différente les modulateurs individuels (34.1 à 34.n).

7. Agencement de modulation externe du rayonnement d'un laser à $CO_2$ de grande puissance selon l'une des revendications 1 à 6, caractérisé en ce qu'une lame séparatrice (38) à propriétés de réflexion relativement faibles est disposée dans le faisceau (36) transmis par un modulateur (34) de telle manière qu'une faible partie du rayonnement soit déviée vers un détecteur (40) à constante de temps suffisamment faible ($\tau \leq 100 \ \mu s$), et dont le signal de sortie est amplifié par un amplificateur électronique (41) et est utilisé comme signal de contre-réaction pour la commande de la bobine de modulateur (34), et dans lequel l'agencement, par l'utilisation de signaux électriques supplémentaires adressés à l'amplificateur (41) et/ou de signaux optiques adressés au détecteur (40), en fonction du réglage de l'état de transmission du modulateur en cas d'absence de courant dans la bobine, peut être réalisé au moyen des éléments de réglage (7) ou en utilisant la température du liquide de refroidissement thermostaté, et où la valeur de la contre-réaction peut porter une caractéristique qui permet une exploitation, de préférence, pour la stabilisation de la puissance du rayonnement transmis d'une part, ou bien pour la réalisation, d'autre part, d'un comportement optique bi-stable.

Fig 1

Fig. 2

Fig. 3

Fig. 4

Fig. 5

Fig. 6

Fig. 7

Fig. 8

Fig. 9

Fig. 10